(19) Europäisches Patentamt
European Patent Office
Office européen des brevets

(11) **EP 4 763 553 A1**

(12) **EUROPEAN PATENT APPLICATION**
published in accordance with Art. 153(4) EPC

(43) Date of publication:
**24.06.2026 Bulletin 2026/26**

(51) International Patent Classification (IPC):
***B60J 1/00*** (2006.01)       ***B32B 17/10*** (2006.01)

(21) Application number: **24864767.9**

(22) Date of filing: **14.09.2024**

(86) International application number:
**PCT/CN2024/118971**

(87) International publication number:
**WO 2025/056052 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.09.2023  CN 202311190266**

(71) Applicant: **Fuyao Glass Industry Group Co., Ltd.**
**Fuqing, Fujian 350300 (CN)**

(72) Inventors:
• **CAI, Feng**
  **Fuzhou, Fujian 350300 (CN)**
• **HE, Changlong**
  **Fuzhou, Fujian 350300 (CN)**
• **LI, Weijun**
  **Fuzhou, Fujian 350300 (CN)**
• **GUAN, Jinliang**
  **Fuzhou, Fujian 350300 (CN)**

(74) Representative: **Mewburn Ellis LLP**
**Aurora Building**
**Counterslip**
**Bristol BS1 6BX (GB)**

(54)     **VEHICLE WINDOW ASSEMBLY AND VEHICLE**

(57)     Provided are a vehicle window assembly and a vehicle. The vehicle window assembly includes a vehicle window glass and an optical device. The vehicle window glass includes an outer glass layer, an adhesive layer and an inner glass layer. The inner glass layer defines a first opening portion, and the optical device is disposed at one side of the inner glass layer facing away from the adhesive layer. A viewing region of the optical device forms an optical window on the vehicle window glass, the optical window is located in the first opening portion. An absolute value of a horizontal diopter of the optical window is less than or equal to 60 mdpt, which is far less than a diopter value of 200 mdpt required in the related art. In addition, the horizontal diopter of the optical window can be ensured not to be affected by the inner glass layer, thereby being beneficial to improving the detection quality of the optical device, and particularly satisfying the diopter requirement of a high-precision camera with a narrow horizontal field of view.

FIG. 2

**Description**

CROSS-REFERENCE TO RELATED APPLICATION(S)

This application claims priority to Chinese Patent Application No. 20231190266.2, filed with the Chinese Patent Office on September 15, 2023 and entitled "VEHICLE WINDOW ASSEMBLY AND VEHICLE", which is incorporated herein by reference in its entirety.

TECHNICAL FIELD

The present disclosure relates to the technical field of vehicles, and in particular to a vehicle window assembly and a vehicle.

BACKGROUND

For a vehicle equipped with a front-view camera, the camera needs to acquire a real-time view through the front windshield. As such, the diopter of an optical transmission region on the front windshield, which is used for the camera to acquire an external field of view (FOV) of the vehicle, needs to meet the corresponding requirements.

SUMMARY

The present disclosure provides a vehicle window assembly and a vehicle having a low diopter, which are beneficial to improving camera quality.

In one aspect, a vehicle window assembly is provided in the present disclosure. The vehicle window assembly includes a vehicle window glass and an optical device. The vehicle window glass includes an outer glass layer, an adhesive layer, and an inner glass layer which are laminated in sequence. The outer glass layer has a first surface and a second surface. The inner glass layer has a third surface and a fourth surface. The adhesive layer is connected between the second surface and the third surface. The inner glass layer defines a first opening portion extending through the third surface and the fourth surface. The optical device is disposed at one side of the inner glass layer facing away from the adhesive layer. The optical device has a field of view (FOV) of $\beta$ in a vertical direction, an included angle between a central axis of the optical device and a target axis of the second surface is $\alpha$, the first opening portion has a dimension of a in an extending direction of the target axis, a viewing region of the optical device forms an optical window on the vehicle window glass, the optical window is located in the first opening portion, the optical window has a dimension of b in the extending direction of the target axis. An absolute value of a horizontal diopter of the optical window is less than or equal to 60 mdpt, and a≥b+10. b = K1 × [1/tan($\alpha$ - $\beta$/2) - 1/tan($\alpha$ + $\beta$/2)], and K1 is a constant and K1 ranges from 12 to 18.

In an optional embodiment, 20°≤$\alpha$≤ 45°, and 17°≤$\beta$≤ 65°.

In an optional embodiment, the optical device has a field of view of $\gamma$ in a horizontal direction, the first opening portion has a dimension of m in the horizontal direction, the optical window has a dimension of n at the second surface in the horizontal direction, m ≥ n+10; n = K2 × tan($\gamma$/2)/ sin($\alpha$), K2 is a constant and K2 ranges from 24 to 36, an absolute value of a vertical diopter of the optical window is less than or equal to 60 mdpt.

In an optional embodiment, 28°≤$\gamma$≤ 120°.

In an optional embodiment, the absolute value of the horizontal diopter of the optical window is less than or equal to 50 mdpt and a horizontal block range of the optical window is less than or equal to 50 mdpt.

In an optional embodiment, an absolute value of a vertical diopter of the optical window is less than or equal to 50 mdpt and a vertical block range of the optical window is less than or equal to 50 mdpt.

In an optional embodiment, a distance between the optical device and the vehicle window glass is greater than or equal to 2 mm and less than or equal to 5 mm.

In an optional embodiment, the adhesive layer defines a second opening portion, the second opening portion is in communication with the first opening portion, and the optical window is located in the second opening portion.

In an optional embodiment, the vehicle window glass further comprises a first shielding layer disposed on the second surface, the first shielding layer defines a third opening portion, the third opening portion is in communication with the second opening portion, and the optical window is located in the third opening portion.

In an optional embodiment, an area of the optical window is smaller than an area of the third opening portion, the area of the third opening portion is smaller than or equal to an area of the first opening portion, and an area of the second opening portion is larger than or equal to the area of the first opening portion.

In an optional embodiment, the vehicle window glass further comprises an antireflection layer disposed on the second surface, the antireflection layer is located in the third opening portion and covers the optical window, and the antireflection layer is configured to reduce reflectivity of the outer glass layer for light emitted and/or received by the optical device.

In an optional embodiment, the vehicle window glass further comprises an electric heating element disposed on the second surface, and the electric heating element is located in the third opening portion and covers at least a part of the optical window.

In an optional embodiment, the vehicle window glass further comprises a second shielding layer disposed on the fourth surface.

In an optional embodiment, the vehicle window glass further comprises a heat insulation layer disposed outside the optical window, and the heat insulation layer comprises at least one metallic silver layer, a silver alloy layer, or a transparent conductive oxide layer.

In an optional embodiment, the outer glass layer is a transparent glass or an ultra-clear glass, and the inner glass layer is a transparent glass or a tinted glass. A total iron content of the transparent glass is less than or equal to 0.08%, and a visible light transmittance of the transparent glass is greater than or equal to 80%; a total iron content of the ultra-clear glass is less than or equal to 0.015%, and a visible light transmittance of the ultra-clear glass is greater than or equal to 91%; and a total iron content of the tinted glass is greater than or equal to 0.1%, and a visible light transmittance of the tinted glass is greater than 70%.

In an optional embodiment, the optical window has a first transmittance TL1 for visible light with a wavelength of 440 nm to 700 nm incident at an incident angle of 0° to 70°, the optical window has a transmittance TL2 for visible light with a wavelength of 600 nm to 700 nm incident at an incident angle of 0° to 70°, $TL1 \geq 50\%$, and $TL2/TL1 \geq 0.8$.

In another aspect, a vehicle is provided in the present disclosure. The vehicle includes the above-mentioned vehicle window assembly, where the first surface faces exterior of the vehicle, and the fourth surface faces interior of the vehicle.

In an optional embodiment, the optical device is a visible-light camera with pixels greater than or equal to 2 million, and an MTF value of the visible-light camera at a 1/2 Nyquist frequency is greater than or equal to 0.6.

The vehicle window assembly provided in the present disclosure enables the absolute value of the horizontal diopter of the optical window to be less than or equal to 60 mdpt, which is far less than a diopter value of 200 mdpt required in the related art. In addition, the horizontal diopter of the optical window can be ensured not to be affected by the inner glass layer, thereby being beneficial to improving the detection quality of the optical device, and particularly satisfying the diopter requirement of a high-precision camera with a narrow horizontal field of view.

BRIEF DESCRIPTION OF THE DRAWINGS

To describe the technical solutions in embodiments of the present disclosure more clearly, the following briefly introduces the accompanying drawings required for describing the embodiments.

FIG. 1 is a schematic structural diagram of a vehicle provided in an embodiment of the present disclosure.

FIG. 2 is a schematic vertical sectional view of a vehicle window assembly provided in a first embodiment of the present disclosure.

FIG. 3 is a partial enlarged view of the vehicle window assembly illustrated in FIG. 2.

FIG. 4 is a schematic horizontal sectional view of the vehicle window assembly illustrated in FIG. 2.

FIG. 5 is an enlarged schematic view showing that a first opening portion illustrated in FIG. 2 is trapezoid.

FIG. 6 is an enlarged schematic view showing that the first opening portion illustrated in FIG. 2 is circular.

FIG. 7 is an enlarged schematic view showing that the first opening portion illustrated in FIG. 2 is elliptic.

FIG. 8 is an enlarged schematic view showing that the first opening portion illustrated in FIG. 2 is rectangular.

FIG. 9 is a schematic vertical sectional view of a vehicle window assembly provided in a second embodiment of the present disclosure.

FIG. 10 is a schematic front view of a vehicle window glass viewed from inside of a vehicle to outside of the vehicle provided in the second embodiment of the present disclosure.

FIG 11 is a partial enlarged view of the vehicle window glass illustrated in FIG. 10.

FIG. 12 is a schematic vertical sectional view of a vehicle window assembly provided in a third embodiment of the present disclosure.

FIG. 13 is a schematic vertical sectional view of a vehicle window assembly provided in a fourth embodiment of the present disclosure.

DETAILED DESCRIPTION

The technical solutions provided in the present disclosure will be clearly and completely described in the following with reference to the accompanying drawings. Apparently, embodiments described in the present disclosure are merely a part rather than all of the embodiments. All other embodiments obtained by a person of ordinary skill in the art based on the embodiments described in the disclosure without creative efforts shall belong to the scope of protection of this application.

Reference in the disclosure to "embodiment" or "implementation" means that a particular feature, structure, or characteristic described in connection with an embodiment or an implementation can be included in at least one embodiment of the disclosure. The appearances of the phrase in various places in the description are not necessarily all referring to the same embodiment, nor are they mutually exclusive, independent, or alternative embodiments. Those skilled in the art will understand, both explicitly and implicitly, that an embodiment described herein may be combined with other embodiments.

The terms "first", "second", etc. in the description, claims, and the accompanying drawings of the present disclosure are used for distinguishing different objects, rather than for describing a specific order. The terms "include", "comprise", and "have" and any variations thereof, are intended to cover a non-exclusive inclusion.

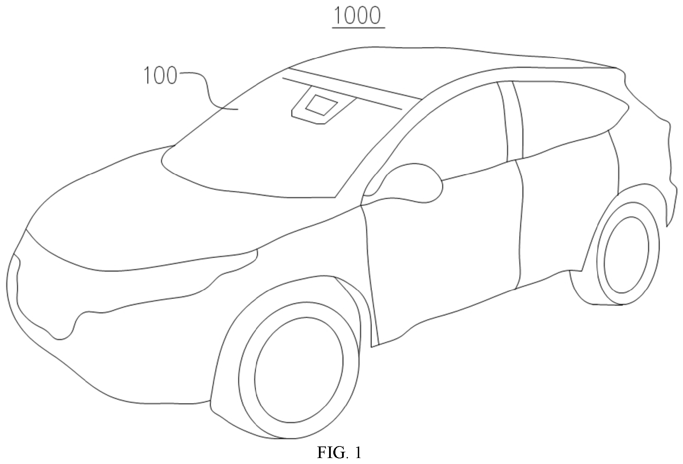

As illustrated in FIG. 1, FIG. 1 is a schematic structural diagram of a vehicle 1000 provided in an embodiment of the present disclosure. The vehicle 1000 may be a sedan, a bus, a truck, a tractor, a special transport vehicle, a special vehicle, or the like. In an embodiment of the present disclosure, a sedan is taken as an example. The vehicle 1000 includes a vehicle window assembly 100. Definitely, the vehicle 1000 can further include wheels, a chassis, an engine, and the like.

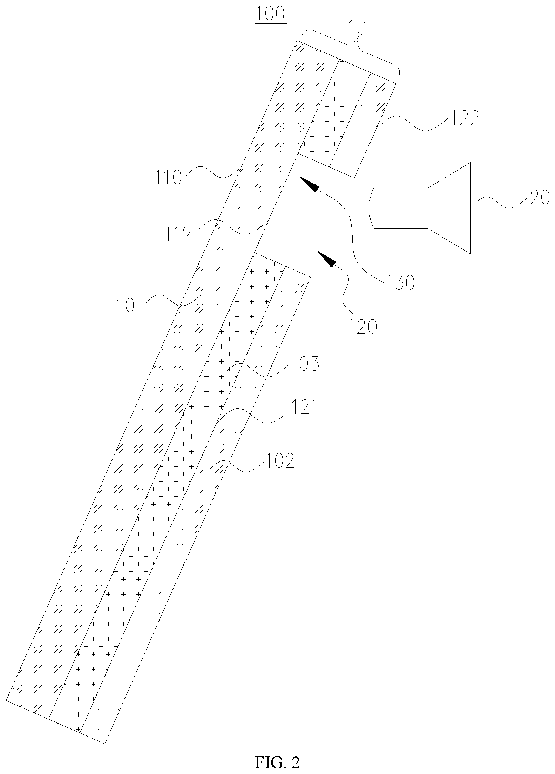

Reference is made to FIG. 2, which is a vertical sectional view of the vehicle window assembly 100 provided in a first embodiment of the present disclosure. The vehicle window assembly 100 includes a vehicle window glass 10 and an optical device 20, and light emitted and/or received by the optical device 20 pass through the vehicle window glass 10 so as to enable the optical device 20 to acquire environmental data outside the vehicle 1000.

Optionally, the vehicle window glass 10 is a front windshield glass, and certainly, in other possible embodiments, the vehicle window glass 10 may also be a rear windshield glass, a side window glass, and the like. The vehicle window glass 10 includes an outer glass layer 101, an adhesive layer 103, and an inner glass layer 102 l which are laminated in sequence. The outer glass layer 101 has a first surface 110 and a second surface 112. The inner glass layer 102 has a third surface 121 and a fourth surface 122. The adhesive layer 103 is connected between second surface 112 and third surface 121. The first surface 110 faces the exterior of the vehicle 1000, the second surface 112 and the third surface 121 both face the adhesive layer 103, and the fourth surface 122 faces the interior of the vehicle 1000. The second surface 112 of the outer glass layer 101 is connected to the third surface 121 of the inner glass layer 102 via the adhesive layer 103.

The present disclosure does not specifically limit the thickness of the outer glass layer 101, the material of the outer glass layer 101, the material of the adhesive layer 103, the thickness of the inner glass layer 102, and the material of the inner glass layer 102. For example, the thickness of the outer glass layer 101 may be greater than or equal to 2 mm and less than or equal to 5 mm. The material of the outer glass layer 101 may include at least one of soda lime glass, high alumina glass, lithium alumina glass, or borosilicate glass. The material of the adhesive layer 103 may be polyvinyl butyral (PVB), ethylene vinyl acetate copolymer (EVA), or an ionic polymer film (i.e., SentryGlas Plus (SGP)). The thickness of the inner glass layer 102 may be greater than or equal to 0.5 mm and less than or equal to 3 mm. The material of the inner glass layer 102 may include at least one of soda lime glass, high alumina glass, lithium alumina glass, or borosilicate glass. The thickness of the outer glass layer 101 and the thickness of the inner glass layer 102 may be the same or different, and preferably, the thickness of the outer glass layer 101 is greater than the thickness of the inner glass layer 102. The material of the outer glass layer 101 and the material of the inner glass layer 102 may be the same or different.

In a possible embodiment, the thickness of the outer glass layer 101 may be 2.1 mm and the thickness of the inner glass layer 102 may be 1.6 mm. In another possible embodiment, the thickness of the outer glass layer 101 may be 5 mm and the thickness of the inner glass layer 102 may be 0.7 mm. By setting the thickness of the outer glass layer 101 to be greater than or equal to 2 mm and less than or equal to 5 mm, the outer glass layer 101 to include at least one of silicate glass, high-aluminum glass, or borosilicate glass, the thickness of the inner glass layer 102 to be greater than or equal to 0.5 mm and less than or equal to 3 mm, and the inner glass layer 102 to include at least one of silicate glass, high-aluminum glass, or borosilicate glass, the strength and light weight of the vehicle window glass 10 can be ensured.

The inner glass layer 102 defines a first opening portion 120 extending through third surface 121 and fourth surface 122. As can be appreciated, the first opening portion 120 is a through-hole defined in the inner glass layer 102. The optical device 20 acquires environmental data outside the vehicle via an optical window in the first opening portion 120.

The optical device 20 is generally mounted at a position close to the roof of the vehicle 1000 so as to facilitate acquisition of a larger viewing region, and preferably, the first opening portion 120 is close to a top edge of the inner glass layer 102. In order to ensure the overall strength of the vehicle window glass 10 so as to better protect the passenger in the vehicle, the area of the first opening portion 120 is S1, the area of the vehicle window glass 10 is S, and preferably S1 and S satisfy the following expression: $0.0004 \leq S1/S \leq 0.15$. In this way, the requirement of a minimum field of view (FOV) of the optical device 20 for acquiring environmental data outside the vehicle can also be satisfied, and the manufacturing difficulty of the vehicle window glass 10 can be reduced. Optionally, S1 and S may also satisfy: $0.0005 \leq S1/S \leq 0.1$, or may satisfy: $0.001 \leq S1/S \leq 0.008$.

In a possible embodiment, the thickness of the outer glass layer 101 is increased to make the thickness of the outer glass layer 101 greater than the thickness of the inner glass layer 102 by 0.5 mm to 4.3 mm, so that the thickness of a part of the outer glass layer 101 corresponding to the first opening portion 120 is increased, the risk of stress concentration occurring at a contour edge of the first opening portion 120, when the vehicle window glass 10 is in use, is decreased, and the overall mechanical performance and structural strength of the vehicle window glass 10 are improved. For example, the outer glass layer 101 has a thickness of 2.1 mm and the inner glass layer 102 has a thickness of 1.6 mm. For another example, the outer glass layer 101 has a thickness of 3.0 mm and the inner glass layer 102 has a thickness of 1.1 mm. For another example, the outer glass layer 101 has a thickness of 3.5 mm and the inner glass layer 102 has a thickness of 0.7 mm. Preferably the thickness of outer glass layer 101 is greater than the thickness of inner glass layer 102 by 1mm to 3mm.

The optical device 20 is disposed at one side of the inner glass layer 102 facing away from the adhesive layer 103. It can be understood that the optical device 20 is disposed inside the vehicle 1000, and the optical device 20 may be fixed to a surface of the inner glass layer 102 facing away from the adhesive layer 103 through a bracket or the like, and may also be fixed to the roof cross beam through the bracket or the like. A shooting direction of the optical device 20 is towards the first opening portion 120.

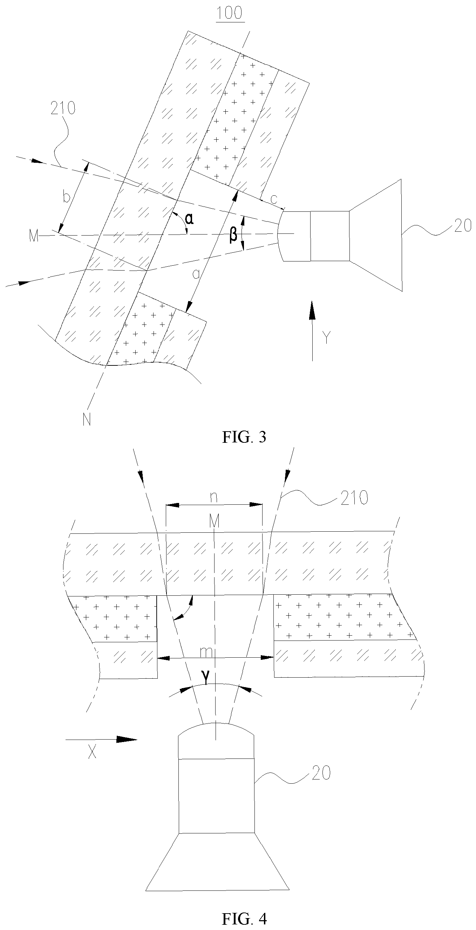

As illustrated in FIG. 3, which is a partial enlarged view of the vehicle window assembly 100 illustrated in FIG. 2, a field of view of the optical device 20 in a vertical direction is $\beta$. The field of view of the optical device 20 in the vertical direction refers to a field of view of the optical device 20 in the vertical cross-section, where the vertical direction may refer to a Y-axis direction illustrated in FIG. 3. An included angle between a central axis of the optical device 20 and a target axis of the second surface 112 is $\alpha$. In the disclosure, the central axis of the optical device 20 may be understood as an optical axis of the optical device 20. The central axis of the optical device 20 can refer to the axis M illustrated in FIG. 3. The target axis of the second surface 112 is an extension line of the second surface 112 in the schematic vertical sectional view of the vehicle window assembly 100. The target axis of the second surface 112 can refer to the axis N illustrated in FIG. 3. The target axis of the second surface 112 can also be understood as a connecting line between the bottom and the top of the second surface 112. The dimension of the first opening portion 120 in an extending direction of the target axis is a. The viewing region of the optical device 20 forms an optical window 210 on the vehicle window 10. The optical window 210 is located in the first opening portion 120, and the dimension of the optical window 210 in the extending direction of the target axis is b. The absolute value of a horizontal diopter of the optical window 210 is less than or equal to 60 mdpt, which is much less than a diopter value of 200 mdpt required in the related art.

$a \geq b+10$, and $b = K1 \times [1/\tan(\alpha - \beta/2) - 1/\tan(\alpha + \beta/2)]$. In other words, in the extending direction of the target axis, the difference between the dimension of the first opening portion 120 and the dimension of the optical window 210 is greater than or equal to 10 mm, which ensures that the vertical diopter of the optical window 210 is not affected by the inner glass layer 102, thereby being beneficial to improve the detection quality of the optical device 20, and being able to meet the diopter requirement of a high-precision camera with a narrow field of view.

In the present disclosure, K1 is a constant and K1 ranges from 12 to 18. Optionally, K1 may be one of 12, 13, 14, 15, 16, 17, and 18. Both a and b are in millimeters (mm).

Optimally, $20° \leq \alpha \leq 45°$, and $17° \leq \beta \leq 65°$. For example, $\alpha$ can be one of 20°, 24°, 30°, 35°, 40°, 42°, 45°, etc. $\beta$ can be one of 17°, 20°, 25°, 30°, 40°, 50°, 65°, etc. By satisfying $20° \leq \alpha \leq 45°$ and $17° \leq \beta \leq 65°$, the absolute value of the horizontal diopter of the optical window 210 is less than or equal to 60 mdpt with the use of a high-precision camera with a narrow field of view.

Reference can be made to FIG. 4, which is a schematic horizontal sectional view of the vehicle window assembly 100. A field of view of the optical device 20 in a horizontal direction is $\gamma$. The field of view of the optical device 20 in the horizontal direction refers to a field of view of the optical device 20 in a horizontal cross-section, where the horizontal direction may refer to an X-axis direction illustrated in FIG. 4. It can be understood that, the horizontal direction is orthogonal to the vertical direction. The dimension of the first opening portion 120 in the horizontal direction is m. The optical window 210 has a dimension of n at the second surface 112 in the horizontal direction. The absolute value of the vertical diopter of optical window 210 is less than or equal to 60 mdpt, which is less than the diopter value of 200 mdpt required in the related art.

$m \geq n+10$ and $n = K2 \times \tan(\gamma/2)/ \sin(\alpha)$. In other words, in the horizontal direction the difference between the dimension of the first opening portion 120 and the dimension of the optical window 210 is greater than or equal to 10 mm, which ensures that the horizontal diopter of the optical window 210 is not affected by the inner glass layer 102, thereby being beneficial to improve the detection quality of the optical device 20, and being able to meet the diopter requirement of a high-precision camera with a narrow field of view.

In the present disclosure, K2 is a constant and K2 ranges from 24 to 36. Optionally, K2 can be one of 24, 25, 26, 27, 28, 29, 30, 31, 32, 33, 34, 35 and 36. Both m and n are in millimeters (mm).

Optimally, $28° \leq \gamma \leq 120°$. For example, $\gamma$ can be one of 28°, 40°, 65°, 74°, 89°, 97°, 120°, etc. By satisfying $28° \leq \gamma \leq 120°$, the absolute value of the vertical diopter of the optical window 210 is less than or equal to 60 mdpt with the use of a high-precision camera with a narrow field of view.

In a possible embodiment, the absolute value of the horizontal diopter of the optical window 210 is less than or equal to 50 mdpt, and a horizontal block range of the optical window 210 is less than or equal to 50 mdpt. Optionally, the absolute value of the horizontal diopter of the optical window 210 may be less than or equal to 38 mdpt, and the horizontal block range of the optical window 210 may be less than or equal to 37 mdpt. The horizontal diopter of the optical window 210 refers to a diopter of the optical window 210 in the horizontal direction. The horizontal block range of the optical window 210 refers to a value obtained by dividing the optical window 210 into several blocks, detecting a maximum diopter and a minimum diopter of each block in the horizontal direction, calculating a difference between the maximum diopter and the minimum diopter as a range of each block, and determining the maximum of ranges of all blocks as the horizontal block range of the optical window 210.

In a possible embodiment, the absolute value of the vertical diopter of the optical window 210 is less than or equal to 50 mdpt, and the vertical block range of the optical window 210 is less than or equal to 50 mdpt. Optionally, the absolute value of the vertical diopter of the optical window 210 may be less than or equal to 30 mdpt, and the vertical block range of the optical window 210 may be less than or equal to 50 mdpt. The vertical diopter of the optical window 210 refers to a diopter of the optical window 210 in the extending direction of the target axis. The vertical block range of the optical window 210 refers to a value obtained by dividing the optical window into several blocks, detecting the maximum diopter and the minimum diopter of each block in the extending direction of the target axis, and calculating a difference between the maximum diopter and the minimum diopter as a range of each block, and determining the maximum of ranges of all blocks as the vertical block range of the optical window 210.

In a possible embodiment, as illustrated in FIG 3, a distance between the optical device 20 and the vehicle window 10 is greater than or equal to 2 mm and less than or equal to 5 mm. The distance between the optical device 20 and the vehicle window 10, i.e., the minimum gap between the optical device 20 and the fourth surface 122 of the inner glass layer 102, may be referred to a dimension c in FIG. 3.

In this embodiment, by setting the distance c between the optical device 20 and the vehicle window glass 10 to be greater than or equal to 2 mm and less than or equal to 5 mm, which may specifically be, for example, 2 mm, 2.5 mm, 3 mm, 3.5 mm, 4 mm, 4.5 mm, 5 mm, and the like, it can not only ensure that the optical device 20 is as close to the vehicle window glass 10 as possible, but also facilitate setting of the position and size of the first opening portion 120. In the present disclosure, the constants K1 and K2 can be determined according to the distance c between the optical device 20 and the vehicle window glass 10. For example, when the distance c is equal to 2 mm, the constant K1 is 12, and the constant K2 is 24. For another example, when the distance c is 5 mm, the constant K1 is 18, and the constant K2 is 36. When the distance c is greater than 2 mm and less than 5 mm, K1 may take a value greater than 12 and less than 18 according to actual design, and K2 may take a value greater than 24 and less than 36 according to actual design.

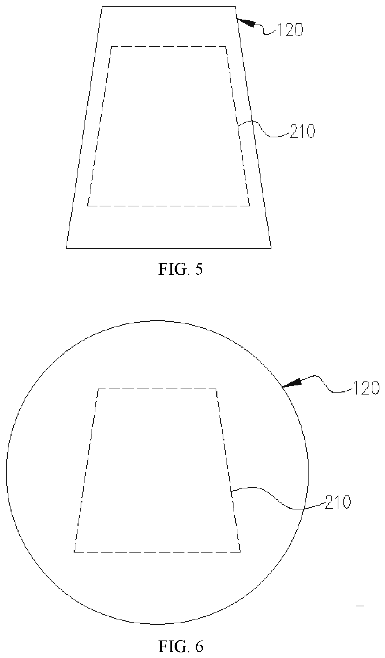

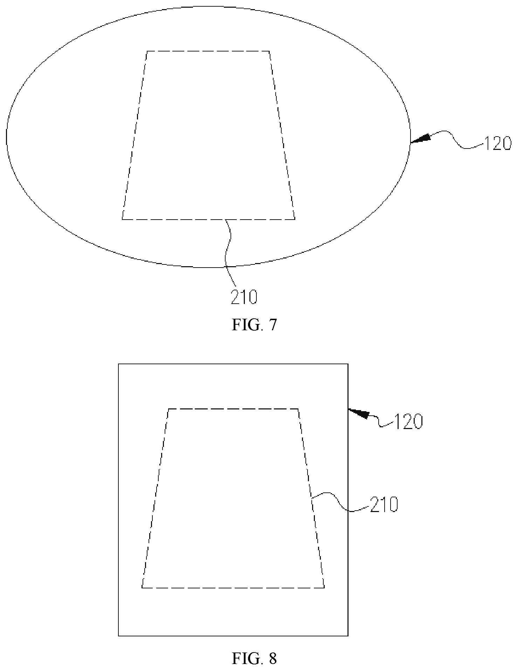

Referring to FIG. 5 to FIG. 8, a shape of the first opening portion 120 may be one of a trapezoid, a circle, an ellipse, a square, and a rectangle, and a region surrounded by a dotted line in the first opening portion 120 is the optical window 210 formed by a viewing region of the optical device 20 on the vehicle glass 10. As illustrated in FIG. 5, the first opening portion 120 is in a trapezoid shape. As illustrated in FIG. 6, the first opening portion 120 is in a circular shape. As illustrated in FIG. 7, the first opening portion 120 is in an oval shape. As illustrated in FIG. 8, the first opening portion 120 is in a rectangular shape.

Please refer to FIGS. 2, 3 and 4, the adhesive layer 103 defines a second opening portion 130. The second opening portion 130 is in communication with the first opening portion 120, and the optical window 210 is located in the first opening portion 120.

In a possible embodiment, the dimension of the second opening portion 130 in the extending direction of the target axis may be greater than or equal to a, and/or the dimension of the second opening portion 130 in the horizontal direction may be greater than or equal to m. In other words, the area of the second opening portion 130 may be greater than or equal to the area of the first opening portion 120.

In this embodiment, the adhesive layer 103 defines the second opening portion 130, the second opening portion 130 is in communication with the first opening portion 120, and the optical window is located in the second opening portion 130, so that the influence of the softening deformation of the adhesive layer 103 caused by processes such as heating and pressurization on the optical quality of the optical window 210 during the manufacturing process of the vehicle window glass 10 can be avoided, both the absolute value of the horizontal diopter and the absolute value of the vertical diopter of the optical window 210 can be ensured to be small.

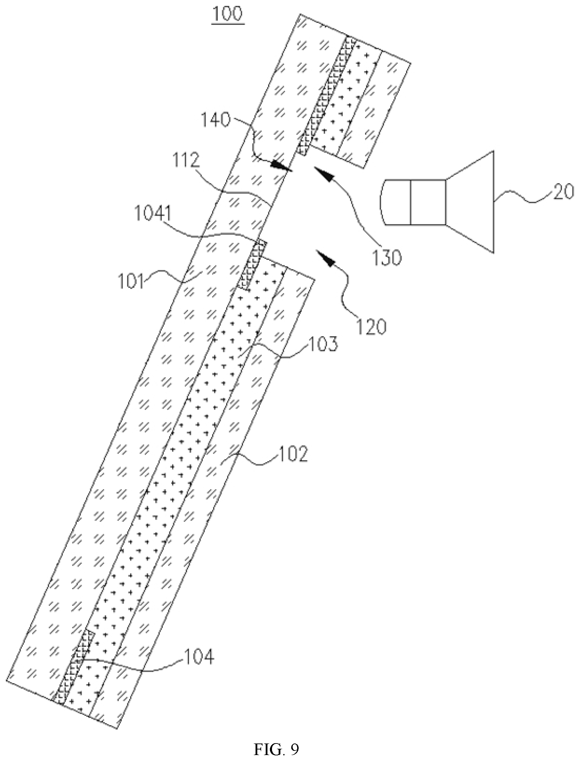

Further, reference is made to FIG. 9 to FIG. 11, where FIG. 9 is a schematic vertical sectional view of a vehicle window assembly provided in a second embodiment of the present disclosure. The vehicle window glass 10 further includes a first shielding layer 104 disposed on the second surface 112. The first shielding layer 104 defines a third opening portion 140. The third opening portion 140 is in communication with the second opening portion 130, and the optical window 210 is located in the third opening portion 140.

Specifically, the outer glass layer 101, the first shielding layer 104, the adhesive layer 103, and the inner glass layer 102 are laminated in sequence. The third opening 140 of the first shielding layer 104, the first opening 120 of the inner glass layer 102, and the second opening 130 of the adhesive layer 103 are in communication with each other. The first shielding layer 104 can be used to shield components in the vehicle, ensure color coordination-and-consistence at the periphery of the vehicle window glass 10, improve the peripheral appearance, and block solar radiation to avoid aging of components in the vehicle and improve the stability and service life of the product. The material of the first shielding layer 104 is preferably selected from a group consisting of black ceramic ink, brown ceramic ink, black ultraviolet ink, brown ultraviolet ink, and combinations thereof. The first shielding layer 104 may be formed by means of screen printing, ink jet printing, etc., and the thickness of the first shielding layer 104 is on the micrometer scale, for example, ranging from 5 to 40 micrometers.

Please refer to FIGS. 9 to 11, the first shielding layer 104 is arranged at a peripheral edge of the second surface 112, and has a T-shaped shielding region extending from the top center to the center of the second surface 112. Because the optical device 20 is generally integrated at the top center of the vehicle window glass 10, in order to meet the requirements of the vehicle appearance and component arrangement, the components can be shielded by the T-shaped shielding region of the first shielding layer 104. In order to enable the optical device 20 to collect environmental data outside the vehicle through the first opening portion 120 and the second opening portion 130, the third opening portion 140 is defined in the T-shaped shielding region of the first shielding layer 104, that is, the third opening portion 140 is not covered with the first shielding layer 104, and the optical window 210 is located in the third opening portion 140.

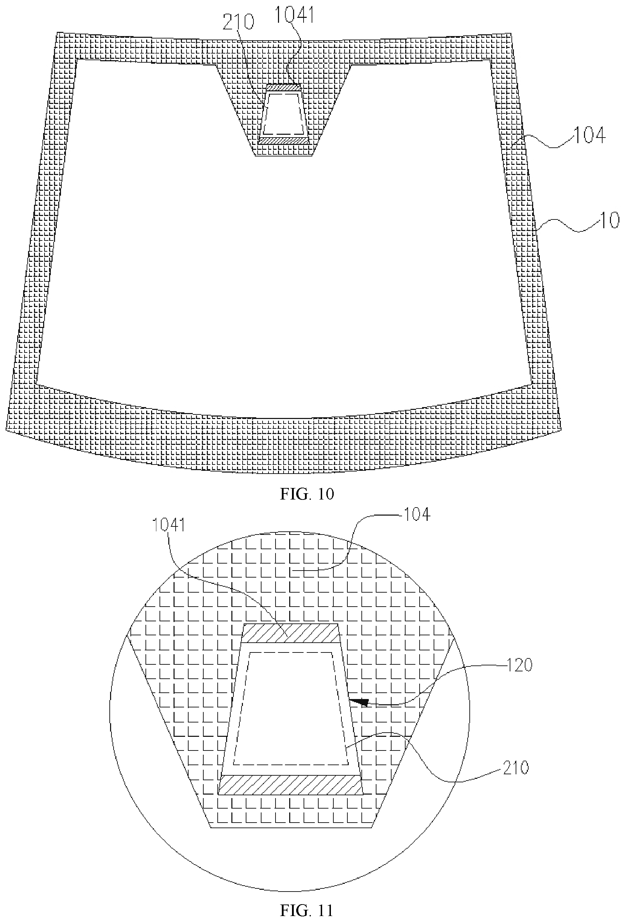

In some embodiments, the dimension of the third opening portion 140 in the extending direction of the target axis is greater than or equal to b and less than or equal to a, and/or the dimension of the third opening portion 140 in the horizontal direction is greater than or equal to n and less than or equal to m. In other words, the area of the third opening portion 140 may be larger than or equal to the area of the optical window 210. Generally, the area of the third opening portion 140 is slightly larger than the area of the optical window 210, which not only avoids the viewing region from being reduced due to an insufficient area of the third opening portion 140, but also preventing excessive stray light from outside the vehicle from entering the optical device 20 and degrading image quality due to an excessive area of the third opening portion 140. Preferably, an outline of the third opening portion 140 may extend beyond an outline of the optical window 210 by 1 to 20 mm, and specifically, for example, 1 mm, 2 mm, 3 mm, 5 mm, 8 mm, 10 mm, 15 mm, 20 mm, or the like, with 1 to 10 mm being more preferred. Furthermore, the area of the third opening portion 140 is smaller than or equal to the area of the first opening portion 120, so as to achieve a better shielding effect. In FIGS. 10 and 11, the first shielding layer 104 has an extension portion 1041 extending into the first opening portion 120, making the area of the third opening portion 140 smaller than the area of the first opening portion 120. The extension portion 1041 may be formed by continuous printing ink or scattered dot ink. The scattered dot ink is preferred as it can further improve the optical quality of the optical window 210.

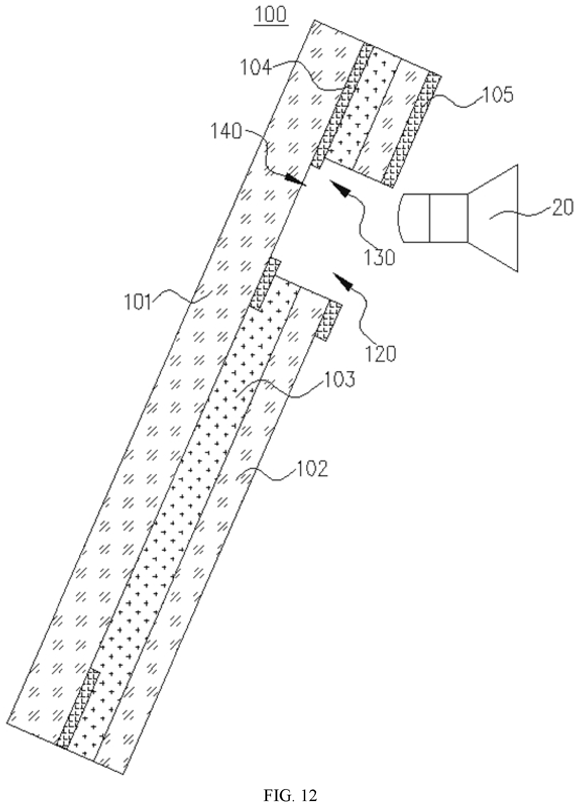

Reference can be further made to FIG. 12, which is a schematic vertical sectional view of a vehicle window assembly provided in a third embodiment of the present disclosure. The vehicle window glass 10 further includes a second shielding layer 105 disposed on the fourth surface 122. The first opening portion 120 extends through the second shielding layer 105. The second shielding layer 105 may be only disposed at the top center of the fourth surface 122 and has the same shape as the T-shaped shielding region of the first shielding layer 104. Alternatively, the second shielding layer 105 may be arranged at a peripheral edge of the fourth surface 122 and has a T-shaped shielding region extending from the top center to the center of the fourth surface 122. Specifically, the outer glass layer 101, the first shielding layer 104, the adhesive layer 103, the inner glass layer 102, and the second shielding layer 105 are laminated in sequence. The material of the second shielding layer 105 is selected from the grouping consisting of black ceramic ink, brown ceramic ink, black ultraviolet ink, brown ultraviolet ink, and combinations thereof. The second shielding layer 105 may be formed by means of screen printing, ink jet printing, and the like, and the thickness of the first shielding layer 104 is on the micrometer scale, for example, ranging from 5 to 40 micrometers.

Two pieces of silicate glasses with a thickness of 2.1 mm each are prepared and each piece of silicate glass is subject to bending forming according to automotive glass bending processes, such as a self-weight bending process or a press bending process. Then two pieces of silicate glasses subject to bending forming and one piece of PVB layer with a thickness of 0.76 mm are subject to lamination processing, initial pressing processing, and high-pressure processing, to form window glasses of comparative examples 1-15. Measured data of the horizontal diopter of the optical window, the horizontal block range of the optical window, the vertical diopter of the optical window, and the vertical block range of the optical window of each of comparative examples 1-15 are measured and calculated, and measurement results are compiled in table 1.

Table 1: Measurement results of window glasses of comparative examples 1-15

| | horizontal diopter (mdpt) | horizontal block range (mdpt) | vertical diopter (mdpt) | vertical block range (mdpt) |
|---|---|---|---|---|
| Comparative Example 1 | -104.6 | 72.3 | 25.5 | 37 |
| Comparative Example 2 | -110.7 | 74.7 | -31.3 | 41.1 |
| Comparative Example 3 | -107.7 | 62.6 | -28.7 | 38.7 |
| Comparative Example 4 | -107.9 | 87.2 | -26.1 | 32.9 |
| Comparative Example 5 | -86 | 74.8 | -32.9 | 33.1 |
| Comparative Example 6 | -108.4 | 74.5 | -30.2 | 40.2 |
| Comparative Example 7 | -104.3 | 68.7 | -31 | 46.7 |
| Comparative Example 8 | -105.5 | 61.7 | -33.4 | 45.6 |
| Comparative Example 9 | -119.7 | 64.3 | -27.5 | 34.5 |
| Comparative Example 10 | -90.3 | 74.8 | -32.3 | 42.4 |
| Comparative Example 11 | -127 | 97.9 | 29.9 | 50.3 |
| Comparative Example 12 | -103.2 | 86.7 | -30.2 | 36.5 |
| Comparative Example 13 | -83.2 | 92 | -27 | 44.4 |
| Comparative Example 14 | -109.2 | 84.1 | -29.9 | 48.1 |
| Comparative Example 15 | -109.9 | 56.4 | -34.1 | 42.2 |

Two pieces of silicate glasses with a thickness of 2.1 mm each are prepared, in which one piece of silicate glass defines a first opening portion 120. Each piece of silicate glass is subject to bending forming according to automotive glass bending processes, such as a self-weight bending process or a press bending process. Then two pieces of silicate glasses subject to bending forming and one piece of PVB layer with a thickness of 0.76 mm are subject to lamination processing, initial pressing processing, and high-pressure processing, to form window glass of embodiments 1-15. The silicate glass defining the first opening portion 120 serves as an inner glass layer 102 and the other piece of silicate glass serves as an outer glass layer 101. Measured data of the horizontal diopter of the optical window, the horizontal block range of the optical window, the vertical diopter of the optical window, the vertical diopter of the optical window, and the vertical block range of the optical window of each of embodiments 1-15 are measured and calculated, and measurement results are compiled in table 2.

Table 2: Measurement results of window glasses of embodiments 1-15

| | horizontal diopter (mdpt) | horizontal block range (mdpt) | vertical diopter (mdpt) | vertical block range (mdpt) |
|---|---|---|---|---|
| Embodiment 1 | -33.3 | 22.3 | -17.4 | 31.5 |
| Embodiment 2 | -28.4 | 25.6 | -18.8 | 30.7 |
| Embodiment 3 | -30.7 | 25.5 | 13.2 | 23.8 |
| Embodiment 4 | -30.5 | 22.9 | -22.8 | 41 |
| Embodiment 5 | -31.1 | 23.6 | 15.2 | 25.3 |
| Embodiment 6 | -35 | 31.3 | -16.9 | 27.4 |
| Embodiment 7 | -35.3 | 26.6 | 16.2 | 29.2 |
| Embodiment 8 | -29.8 | 24.8 | -15.9 | 25.5 |
| Embodiment 9 | -30.5 | 26.6 | -16.8 | 30.6 |
| Embodiment 10 | -28.5 | 31.4 | 18.8 | 34.7 |
| Embodiment 11 | -32.2 | 23.7 | 24.4 | 39.8 |
| Embodiment 12 | -37.9 | 36.1 | -20.2 | 34 |
| Embodiment 13 | -33.4 | 25.6 | 16.8 | 27.8 |

(continued)

|  | horizontal diopter (mdpt) | horizontal block range (mdpt) | vertical diopter (mdpt) | vertical block range (mdpt) |
|---|---|---|---|---|
| Embodiment 14 | -32.4 | 24.2 | -16.4 | 27.1 |
| Embodiment 15 | -32.6 | 26.3 | 28.1 | 49.1 |

The data in tables 1 and 2 were measured using a LABSCAN-SCREEN system from ISRA VISION Inc. The maximum diopter in the horizontal direction of the optical window was measured with a filter parameter of 3/2/1 30/5/5 and a detection angle of 24.5°C as the horizontal diopter. The horizontal block range is determined by dividing the optical window into multiple 15 mm × 15 mm block, detecting the maximum and minimum diopters in the horizontal direction of each block with a filter parameter of 3/2/1 30/5/5 and a detection angle of 24.5°C, calculating a difference between the maximum and minimum diopters as a range of each block, and taking the maximum of ranges of all blocks as the horizontal block range. The maximum diopter in the extending direction of the target axis of the optical window is measured with a filter parameter of 3/2/1 30/5/5 and a detection angle of 24.5°C as the vertical diopter. The horizontal block range is determined by dividing the optical window into multiple 15 mm × 15 mm block, detecting the maximum and minimum diopters in the extending direction of the target axis of each block with a filter parameter of 3/2/1 30/5/5 and a detection angle of 24.5°C, calculating a difference between the maximum and minimum diopters as a range of each block, and taking the maximum of ranges of all blocks as the vertical block range. Positive and negative signs of the horizontal diopters and the vertical diopters in tables 1 and 2 merely represent a direction of optical distortion, a positive value represent that the direction of the optical distortion is convex, a negative value represents that the direction of the optical distortion is concave. Absolute values of the horizontal diopters and the vertical diopters represent degrees of the optical distortion, and a larger absolute value represents a larger degree of optical distortion.

It can be seen from table 1 that, conventional laminated glass is used as a vehicle window glass in comparative examples 1-15, absolute values of the horizontal diopters of optical windows of the optical windows are all greater than 80 mdpt, and the horizontal block ranges are all greater than 55 mdpt. The vehicle window glass, when used as the front windshield, is typically installed in a vertical-line orientation to minimize visual distortion and visual fatigue of the driver. Therefore, the optical deformation of the optical window in the horizontal direction has the greatest influence on image capture of the optical device, resulting in more pronounced distortion in the acquired images. It can be seen from table 2 that the vehicle window glass 10 of the present disclosure is used in embodiments 1-15, which can significantly reduce the absolute value of the horizontal diopter of the optical window to less than or equal to 60 mdpt, even less than or equal to 50 mdpt, and even less than or equal to 40 mdpt. In addition, the horizontal block range of the optical window can also be reduced to less than or equal to 50 mdpt, even less than or equal to 40 mdpt, and even less than or equal to 30 mdpt, indicating that the optical deformation degree of the optical window in the horizontal direction is relatively uniform, so that the acquired image will not exhibit localized abnormal distortion.

In addition, it can be seen from table 1 that the conventional laminated glass is used as a vehicle window glass in comparative examples 1-15, absolute values of the vertical diopter of the optical windows are all greater than 25 mdpt, and the vertical block ranges are all greater than 30 mdpt. It can be seen from table 2 that the vehicle window glass 10 of the present disclosure is used in embodiments 1-14, which can reduce the absolute value of the vertical diopter of the optical window to less than 25 mdpt, or even less than or equal to 20 mdpt. In some embodiments, the vertical block range of the optical window can also be reduced to less than 30 mdpt, indicating that the optical deformation degree of the optical window in the extending direction of the target axis is relatively uniform, so that the acquired image will not exhibit localized abnormal distortion.

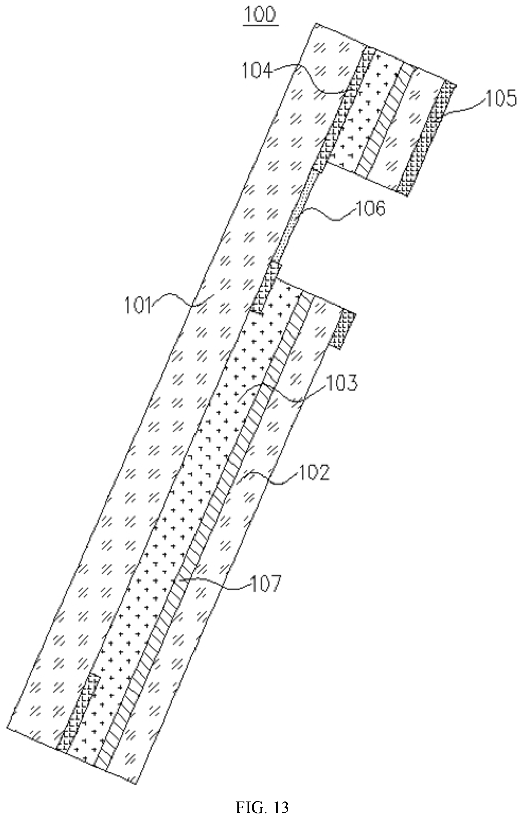

Further, as illustrated in FIG. 13, FIG. 13 is a schematic vertical sectional view of a vehicle window assembly provided in a fourth embodiment of the present disclosure. The vehicle window glass 10 may also include an antireflection layer 106 disposed on the second surface 112. The antireflection layer 106 may be located in the third opening portion 140 and cover the optical window 210. The antireflection layer 106 is configured to reduce reflectivity of the outer glass layer 101 for light emitted and/or received by the optical device 20, and improve detection quality of the optical device 20.

Further, the vehicle window glass 10 can further include an electric heating element disposed on the second surface 112, where the electric heating element may include an electric heating wire, an electric heating sheet, or the like, such as a tungsten wire. For example, the electrical heating element may be positioned in the third opening portion 140 and cover at least a part of optical window 210. The electric heating element is used for heating the optical window 210, realizing the effects of defogging and defrosting of the optical window 210, and improving the detection quality of the optical device 20.

Further, the vehicle window glass 10 can further include a heat insulation layer 107 disposed outside the optical window 210, where the heat insulation layer may include at least one metallic silver layer, a silver alloy layer, or a transparent conductive oxide layer. The heat insulation layer can be used for reflecting infrared rays, and even achieve electrical heating by incorporating a bus bar. The heat insulation layer may be directly deposited onto the second surface 112 or the third surface 121 through chemical vapor deposition (CVD) or physical vapor deposition (CVD), for example, through magnetron sputtering deposition. Furthermore, preferably, the heat insulation layer can withstand a heat treatment process at a high temperature, for example, a heat treatment process of a bending process such as baking or tempering. Specifically, the heat insulation layer 107 may include at least one metallic silver layer, a silver alloy layer, or a transparent conductive oxide layer. The transparent conductive oxide layer may be selected from indium tin oxide (ITO), fluorine-doped tin oxide (FTO), aluminum-doped zinc oxide (AZO), antimony-doped tin oxide (ATO), and the like. The heat insulation layer further includes at least two dielectric layers, where each metal silver layer, the silver alloy layer, or the transparent conductive oxide layer is located between two dielectric layers. The material of the at least two dielectric layers is selected from the group consisting of an oxide, a nitride, or an oxynitride of at least one of Zn, Ti, Si, Al, Sn, Se, Zr, Ni, In, Cr, W, Ca, Y, Nb, Cu, or Sm. For example, the material of the at least two dielectric layers may be zinc tin oxide (ZnSnOx), aluminum doped zinc oxide (AZO), titanium oxide (TiO x), silicon zirconium nitride (SiZrN), silicon aluminum nitride (SiAlN), silicon aluminum oxide (SiAlO), or the like.

Optionally, the outer glass layer 101 is a transparent glass or an ultra-clear glass, and the inner glass layer 102 is a transparent glass or a tinted glass. A total iron content of the transparent glass is less than or equal to 0.08%, and a visible light transmittance of the transparent glass is greater than or equal to 80%. A total iron content of the ultra-clear glass is less than or equal to 0.015%, and a visible light transmittance of the ultra-clear glass is greater than or equal to 91%. A total iron content of the tinted glass is greater than or equal to 0.1%, and a visible light transmittance of the tinted glass is greater than 70%.

Optionally, the optical device 20 may be configured to collect environmental data outside the vehicle 1000. For example, the optical device 20 may include one of a visible-light camera, a near infrared camera, a thermal imager, a laser radar, a gesture detection sensor, and the like. The optical device 20 is able to better assist in achieving the intelligence and safety performance of the vehicle.

In a possible embodiment, the optical device 20 is a visible-light camera with pixels greater than or equal to 2 million. The visible-light camera has a modulation transfer function (MTF) value greater than or equal to 0.6 at a 1/2 Nyquist frequency. A photosensitive chip of the visible-light camera may be a complementary metal oxide semiconductor (CMOS) or a charge coupled device (CCD). The visible-light camera may be of 2 million pixels, 5 million pixels, 8 million pixels, etc. The size of the photosensitive chip of the visible-light camera may be 2/3" (8.8 mm*6.6 mm), 1/1.7" (7.4 mm*5.6 mm), 1/1.8" (7.2 mm*5.3 mm), etc., and the photosensitive chip with a larger size may be preferably used to receive more optical signals. The lens parameters of the visible-light camera, such as the focal length, the f-number, the field of view, etc. can meet the requirements of the usage scenario. The maximum optical distortion of the lens of the visible-light camera is less than 3%. The MTF value of the visible-light camera at a 1/2 Nyquist frequency is greater than or equal to 0.6, so as to satisfy the requirements of high-definition image acquisition.

In order to further meet the requirements of high-definition image acquisition, in particular to meet the requirements of image acquisition of a visible-light camera with pixels greater than or equal to 5 million and even greater than or equal to 8 million, preferably, the optical window 210 has a first transmittance TL1 for visible light with a wavelength of 400 nm to 700 nm incident at an incident angle of 0° to 70°, $TL1 \geq 50\%$, which can be specifically exemplified as TL1 = 50%, 51%, 52%, 53%, 54%, 55%, 56%, 57%, 58%, 59%, 60%, 61%, 62%, 63%, 64%, 65%, 66%, 67%, 68%, 69%, and even $TL1 \geq 70\%$. Further, the optical window 210 has a second transmittance TL2 for visible light with a wavelength of 600 nm to 700 nm incident at an incident angle of 0° to 70°, $TL2/TL1 \geq 0.8$. The ratio TL2/TL1 is also generally referred to as a red light ratio. Specifically, for example, TL2/TL1=0.80, 0.81, 0.82, 0.83, 0.84, 0.85, 0.86, 0.88, etc., with $TL2/TL1 \geq 0.85$ being preferred.

Features mentioned in the description, claims, and accompanying drawings may be combined with one another as long as they are meaningful in the scope of the present disclosure. The advantages and features described for the vehicle window assembly 100 apply in a corresponding manner to the vehicle 1000.

Although the embodiments of the present disclosure have been illustrated and described, it can be understood that the above embodiments are illustrative and cannot be construed as limitations to the present disclosure. Those skilled in the art can make changes, modifications, replacements, and variations to the above embodiments within the scope of the present disclosure, and these changes and modifications shall also fall within the scope of protection of the present disclosure.

**Claims**

1. A vehicle window assembly, comprising:

   a vehicle window glass, the vehicle window glass comprising an outer glass layer, an adhesive layer, and an inner glass layer which are laminated in sequence, the outer glass layer having a first surface and a second surface, the inner glass layer having a third surface and a fourth surface, the adhesive layer being connected between the second surface and the third surface, and the inner glass layer defining a first opening portion extending through the third surface and the fourth surface; and

an optical device disposed at one side of the inner glass layer facing away from the adhesive layer;

wherein the optical device has a field of view of $\beta$ in a vertical direction, an included angle between a central axis of the optical device and a target axis of the second surface is $\alpha$, the first opening portion has a dimension of a in an extending direction of the target axis, a viewing region of the optical device forms an optical window on the vehicle window glass, the optical window is located in the first opening portion, the optical window has a dimension of b in the extending direction of the target axis; an absolute value of a horizontal diopter of the optical window is less than or equal to 60 mdpt, and a≥b+10; and

$$b = K1 \times [1/\tan(\alpha - \beta/2) - 1/\tan(\alpha + \beta/2)],$$

and K1 is a constant and K1 ranges from 12 to 18.

2. The vehicle window assembly of claim 1, wherein 20°≤$\alpha$≤ 45°, and 17°≤$\beta$≤ 65°.

3. The vehicle window assembly of claim 1, wherein the optical device has a field of view of $\gamma$ in a horizontal direction, the first opening portion has a dimension of m in the horizontal direction, the optical window has a dimension of n at the second surface in the horizontal direction, m≥n+10; and n = K2 $\times$ tan($\gamma$/2)/ sin($\alpha$), K2 is a constant and K2 ranges from 24 to36, and an absolute value of a vertical diopter of the optical window is less than or equal to 60 mdpt.

4. The vehicle window assembly of claim 3, wherein 28°≤$\gamma$≤ 120°.

5. The vehicle window assembly of claim 1, wherein the absolute value of the horizontal diopter of the optical window is less than or equal to 50 mdpt and a horizontal block range of the optical window is less than or equal to 50 mdpt.

6. The vehicle window assembly of claim 1, wherein an absolute value of a vertical diopter of the optical window is less than or equal to 50 mdpt and a vertical block range of the optical window is less than or equal to 50 mdpt.

7. The vehicle window assembly of claim 1, wherein a distance between the optical device and the vehicle window glass is greater than or equal to 2 mm and less than or equal to 5 mm.

8. The vehicle window assembly of claim 1, wherein the adhesive layer defines a second opening portion, the second opening portion is in communication with the first opening portion, and the optical window is located in the second opening portion.

9. The vehicle window assembly of claim 8, wherein the vehicle window glass further comprises a first shielding layer disposed on the second surface, the first shielding layer defines a third opening portion, the third opening portion is in communication with the second opening portion, and the optical window is located in the third opening portion.

10. The vehicle window assembly of claim 9, wherein an area of the optical window is smaller than an area of the third opening portion, the area of the third opening portion is smaller than or equal to an area of the first opening portion, and an area of the second opening portion is larger than or equal to the area of the first opening portion.

11. The vehicle window assembly of claim 9, wherein the vehicle window glass further comprises an antireflection layer disposed on the second surface, the antireflection layer is located in the third opening portion and covers the optical window, and the antireflection layer is configured to reduce reflectivity of the outer glass layer for light emitted and/or received by the optical device.

12. The vehicle window assembly of claim 9, wherein the vehicle window glass further comprises an electric heating element disposed on the second surface, and the electric heating element is located in the third opening portion and covers at least a part of the optical window.

13. The vehicle window assembly of any one of claims 1 to 12, wherein the vehicle window glass further comprises a second shielding layer disposed on the fourth surface.

14. The vehicle window assembly of any one of claims 1 to 12, wherein the vehicle window glass further comprises a heat insulation layer disposed outside the optical window, and the heat insulation layer comprises at least one metallic silver layer, a silver alloy layer, or a transparent conductive oxide layer.

15. The vehicle window assembly of any one of claims 1 to 12, wherein the outer glass layer is a transparent glass or an ultra-clear glass, and the inner glass layer is a transparent glass or a tinted glass;
a total iron content of the transparent glass is less than or equal to 0.08%, and a visible light transmittance of the transparent glass is greater than or equal to 80%; a total iron content of the ultra-clear glass is less than or equal to 0.015%, and a visible light transmittance of the ultra-clear glass is greater than or equal to 91%; and a total iron content of the tinted glass is greater than or equal to 0.1%, and a visible light transmittance of the tinted glass is greater than 70%.

16. The vehicle window assembly of any one of claims 1 to 12, wherein the optical window has a first transmittance TL1 for visible light with a wavelength of 440 nm to 700 nm incident at an incident angle of 0° to 70°, the optical window has a transmittance TL2 for visible light with a wavelength of 600 nm to 700 nm incident at an incident angle of 0° to 70°, TL1 $\geq$ 50%, and TL2/TL1 $\geq$ 0.8.

17. A vehicle, comprising the vehicle window assembly of any one of claims 1 to 16, wherein the first surface faces exterior of the vehicle, and the fourth surface faces interior of the vehicle.

18. The vehicle of claim 17, wherein the optical device is a visible-light camera with pixels greater than or equal to 2 million, and a modulation transfer function (MTF) value of the visible-light camera at a 1/2 Nyquist frequency is greater than or equal to 0.6.

FIG. 1

FIG. 2

FIG. 3

FIG. 4

FIG. 5

FIG. 6

120

210

FIG. 7

120

210

FIG. 8

FIG. 9

FIG. 10

FIG. 11

FIG. 12

FIG. 13

## INTERNATIONAL SEARCH REPORT

| International application No. |
| --- |
| **PCT/CN2024/118971** |

| A. | CLASSIFICATION OF SUBJECT MATTER |
| --- | --- |

B60J1/00(2006.01)i;　B32B17/10(2006.01)i

According to International Patent Classification (IPC) or to both national classification and IPC

| B. | FIELDS SEARCHED |
| --- | --- |

Minimum documentation searched (classification system followed by classification symbols)

　　IPC：B60J, B32B

Documentation searched other than minimum documentation to the extent that such documents are included in the fields searched

Electronic data base consulted during the international search (name of data base and, where practicable, search terms used)

　　CNTXT, ENTXT, VEN, CNKI, DWPI: MTE, 调制传递函数, 函数, 调制, 屈光度, 光学畸变, 遮蔽, 掩蔽, 反射, 光学器件, 光学元件, 摄像头, 照相机, 传感器, optical, diopter, camera, windshield, optics, sensor, obscuration, black

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117124819 A (FUYAO GLASS INDUSTRY GROUP CO., LTD.) 28 November 2023 (2023-11-28)<br>　　claims 1-18 | 1-18 |
| PX | CN 117261559 A (FUYAO GLASS INDUSTRY GROUP CO., LTD.) 22 December 2023 (2023-12-22)<br>　　claims 1-4 | 1-4 |
| A | CN 115485133 A (AGP AMERICA S.A.) 16 December 2022 (2022-12-16)<br>　　description, specific embodiments, figures 1-11, and claims 1-26 | 1-18 |
| A | CN 113365815 A (SAINT-GOBAIN GLASS FRANCE S.A.) 07 September 2021 (2021-09-07)<br>　　entire document | 1-18 |
| A | US 2023136351 A1 (GM GLOBAL TECHNOLOGY OPERATIONS LLC) 04 May 2023 (2023-05-04)<br>　　entire document | 1-18 |
| A | WO 2016143582 A1 (NIPPON SHEET GLASS CO., LTD.) 15 September 2016 (2016-09-15)<br>　　entire document | 1-18 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 December 2024** | **29 December 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/118971**

| Patent document cited in search report | | | Publication date (day/month/year) | Patent family member(s) | | | Publication date (day/month/year) |
|---|---|---|---|---|---|---|---|
| CN | 117124819 | A | 28 November 2023 | None | | | |
| CN | 117261559 | A | 22 December 2023 | None | | | |
| CN | 115485133 | A | 16 December 2022 | US | 2023150225 | A1 | 18 May 2023 |
| | | | | EP | 4143021 | A1 | 08 March 2023 |
| | | | | WO | 2021220206 | A1 | 04 November 2021 |
| CN | 113365815 | A | 07 September 2021 | US | 2023052395 | A1 | 16 February 2023 |
| | | | | US | 12005679 | B2 | 11 June 2024 |
| | | | | JP | 2023509167 | A | 07 March 2023 |
| | | | | WO | 2021136907 | A1 | 08 July 2021 |
| | | | | KR | 20220123527 | A | 07 September 2022 |
| | | | | FR | 3105943 | A1 | 09 July 2021 |
| | | | | FR | 3105943 | B1 | 19 May 2023 |
| | | | | EP | 4085282 | A1 | 09 November 2022 |
| | | | | EP | 4085282 | B1 | 31 January 2024 |
| US | 2023136351 | A1 | 04 May 2023 | US | 11789352 | B2 | 17 October 2023 |
| | | | | DE | 102022122471 | A1 | 04 May 2023 |
| WO | 2016143582 | A1 | 15 September 2016 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 20231190266